# EUROPEAN PATENT APPLICATION

(11) **EP 4 170 787 A1**
(43) Date of publication of application: **26.04.2023**
(21) Application number: 20940764.2
(22) Date of filing: 18.06.2020
(51) Int. Cl.: H01M 50/204, H01M 50/284

(54) **BATTERY SHELL AND BATTERY PACK WITH BATTERY SHELL**

(71) Applicant: DONGGUAN POWERAMP TECHNOLOGY LIMITED, Dongguan, Guangdong 523808 (CN)
(72) Inventor: ZHOU, Quan, Ningde, Fujian 350900 (CN); WU, Mingjie, Dongguan, Guangdong 523000 (CN)
(74) Representative: Klunker IP Patentanwälte PartG mbB
(86) International application number: PCT/CN2020/096889
(87) International publication number: WO 2021/253353

(57) **Abstract**

This application discloses a battery shell configured to accommodate a plurality of cells and a circuit board. The battery shell includes a first housing and a second housing. The first housing and the second housing form an accommodation cavity configured to accommodate the plurality of cells and the circuit board. The first housing includes a first sidewall and a fixing structure. The fixing structure includes a first fixing portion disposed on the first sidewall and toward the accommodation cavity. The first fixing portion is configured to fix the circuit board. This application further discloses a battery pack with the battery shell.

## Description

### TECHNICAL FIELD

This application relates to the field of batteries, and in particular, to a battery shell and a battery pack with said battery shell.

### BACKGROUND

By virtue of characteristics such as a high energy density, being rechargeable for many cycles, and a long storage time, lithium-ion batteries embrace a great development prospect in consumer electronics, electric vehicles, smart energy storage equipment, electric bicycles, large unmanned aerial vehicles, and electric automobiles. Currently, in a process of processing a battery in the industry, it is necessary to fix a circuit board in a battery pack to prevent the circuit board from moving in the battery pack. In existing technologies, the circuit board is fixed by a screw and a nut. However, the use of the screw and the nut increases the work of screwing. The work of screwing is time-consuming, and the screw and the nut are costly. In addition, the nut that is put on an injection molded part is not reliable.

### SUMMARY

In view of the foregoing, it is necessary to disclose a battery shell and a battery pack with the battery shell.

An embodiment of this application provides a battery shell, configured to accommodate a plurality of cells and a circuit board. The battery shell includes a first housing and a second housing. The first housing and the second housing form an accommodation cavity configured to accommodate the plurality of cells and the circuit board. The first housing includes a first sidewall and a fixing structure. The fixing structure includes a first fixing portion disposed on the first sidewall and toward the accommodation cavity. The first fixing portion is configured to fix the circuit board.

According to some embodiments of this application, the fixing structure includes a second fixing portion disposed on the first sidewall and toward the accommodation cavity. The first fixing portion extends from the first sidewall toward the accommodation cavity. The first fixing portion, the second fixing portion, and the first sidewall form a first slot. The first slot is configured to fix the circuit board.

According to some embodiments of this application, the first housing includes a first bottom wall, a first top wall, the first sidewall connects the first bottom wall and the first top wall, and two first end walls connect the first bottom wall, the first top wall, and the first sidewall. The second housing includes a second bottom wall, a second top wall, a second sidewall connects the second bottom wall and the second top wall, and two second end walls connect the second bottom wall, the second top wall, and the second sidewall.

According to some embodiments of this application, the first sidewall is provided with a first groove, the first groove is configured to accommodate one side of one or more cells. The second sidewall is provided with a second groove, the second groove is configured to accommodate an opposite side of the one or more cells.

According to some embodiments of this application, the first housing includes a guiding structure disposed on the first sidewall. A side of the first fixing portion farther away from the first sidewall is provided with a guiding surface facing the first slot. The guiding structure includes the guiding surface.

According to some embodiments of this application, the first fixing portion and the second fixing portion are disposed between the first top wall and the first groove.

An embodiment of this application further provides a battery pack. The battery pack includes a battery shell, a cell module, and a circuit board. The cell module is electrically connected to the circuit board. The battery shell is the battery shell described above.

According to some embodiments of this application, the battery pack includes a first connecting piece and a second connecting piece. The first connecting piece is connected to tabs of two adjacent cells by welding. The second connecting piece is welded to the circuit board and is connected to the first connecting piece by welding.

According to some embodiments of this application, a positioning slot is disposed at a lateral edge of the circuit board. A fixing structure includes a positioning piece disposed on a first sidewall and toward an accommodation cavity. The positioning piece is configured to position the positioning slot disposed in the circuit board.

According to some embodiments of this application, the positioning slot includes a bevel structure.

According to some embodiments of this application, the positioning slot is a V-shaped structure.

According to some embodiments of this application, a first bonding piece is disposed on a fixing structure and/or the circuit board. The first bonding piece is configured to fix the circuit board and the fixing structure.

According to some embodiments of this application, a second bonding piece is disposed on the battery shell and/or a cell. The second bonding piece is configured to fix the cell and the battery shell.

In the battery shell and the battery pack with the battery shell, the accommodation cavity formed by the first housing and the second housing accommodates the circuit board. Then the first fixing portion disposed in the accommodation cavity fixes the circuit board. In this way, the circuit board is fixed in the battery shell, and the circuit board can be reinforced by means such as bonding, thereby saving screws and nuts, improving work efficiency, and reducing cost.

### BRIEF DESCRIPTION OF DRAWINGS

FIG. 1 is a schematic structural diagram of a battery pack according to an embodiment of this application;
FIG. 2 is a structural sectional view of the battery pack shown in FIG. 1 and sectioned along an II-II line;
FIG. 3 is a schematic exploded view of a structure of the battery pack shown in FIG. 1;
FIG. 4 is a structural sectional view of the battery pack shown in FIG. 1 and sectioned along an IV-IV line;
FIG. 5 is a schematic structural diagram of a first housing shown in FIG. 1;
FIG. 6 is a structural sectional view of the first housing shown in FIG. 5 and sectioned along an VI-VI line;
FIG. 7 is a structural sectional view of a battery pack according to a second embodiment of this application; and
FIG. 8 is a schematic structural diagram of a first housing shown in FIG. 7.

### Reference numerals:

Battery pack 100, 100a
Battery shell 10, 10a
First housing 11
First bottom wall 101
First top wall 102
First sidewall 103
First end wall 104
Fixing structure 111, 111a
First fixing portion 1111, 1111a
Second fixing portion 1112, 1112a
First slot 1113, 1113a
Guiding surface 1114
Guiding structure 1115
First guiding piece 1116, 1116a
Second guiding piece 1117, 1117a
Positioning piece 1118
Snap buckle 114
Second housing 12
Second bottom wall 201
Second top wall 202
Second sidewall 203
Second end wall 204
Snap block 124
Accommodation cavity 13
First groove 131
Second groove231
Cell module 20
Cell 21
Cell body 211
Tab 212
Circuit board 30, 30a
Connecting slot 31
Positioning slot 32
Foam 40
First connecting piece 50
Second connecting piece 60

### DETAILED DESCRIPTION OF EMBODIMENTS

The following clearly and thoroughly describes the technical solutions in some embodiments of this application with reference to the drawings hereof. Evidently, the described some embodiments are merely a part of but not all of the embodiments of this application.

It needs to be noted that a component referred to as being "fixed to" another component may directly exist on the other component or may be fixed to the other component through an intermediate component. A component considered to be "connected to" another component may be directly connected to the other component or may be connected to the other component through an intermediate component. A component considered to be "disposed on" another component may be directly disposed on the other component or may be disposed on the other component through an intermediate component. The terms "vertical", "horizontal", "left", "right" and similar expressions used herein are merely for ease of description.

Unless otherwise defined, all technical and scientific terms used herein have the same meanings as usually understood by a person skilled in the technical field of this application. The terms used in the specification of this application herein are merely intended for describing specific some embodiments but are not intended to limit this application. The term "and/or" used herein is intended to include any and all combinations of one or more related items preceding and following the term.

Some embodiments of this application provide a battery shell, configured to accommodate a plurality of cells and a circuit board. The battery shell includes a first housing and a second housing. The first housing and the second housing form an accommodation cavity configured to accommodate the plurality of cells and the circuit board. The first housing includes a first sidewall and a fixing structure. The fixing structure includes a first fixing portion disposed on the first sidewall and toward the accommodation cavity. The first fixing portion is configured to fix the circuit board.

Some embodiments of this application further provide a battery pack. The battery pack includes a battery shell, a cell module, and a circuit board. The cell module is electrically connected to the circuit board. The battery shell is the battery shell described above.

In the battery shell and the battery pack with the battery shell, the accommodation cavity formed by the first housing and the second housing accommodates the circuit board. Then the first fixing portion disposed in the accommodation cavity fixes the circuit board. In this way, the circuit board is fixed in the battery shell, and the circuit board can be reinforced by means such as bonding, thereby saving screws and nuts, improving work efficiency, and reducing cost.

The following describes some embodiments of this application in detail with reference to drawings. To the extent that no conflict occurs, the following some embodiments and the features in the some embodiments may be combined with each other.

### First Embodiment

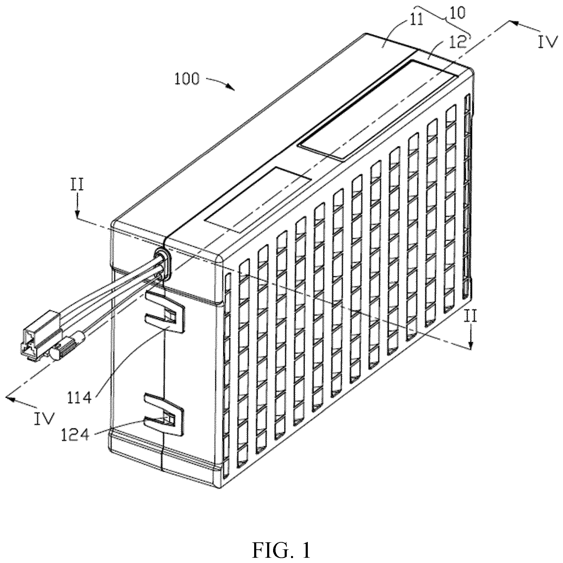

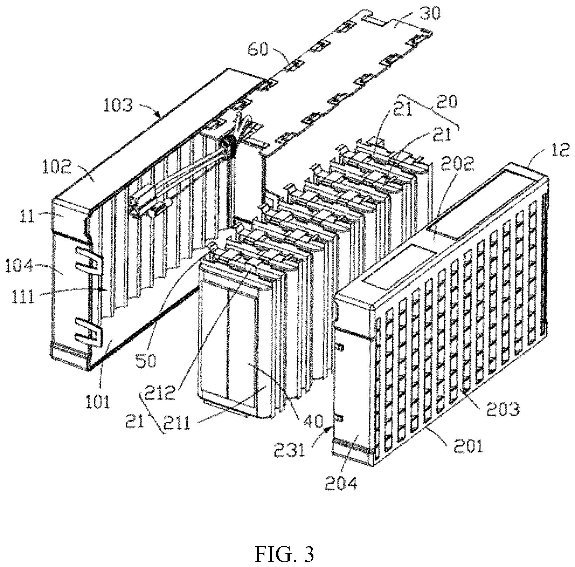

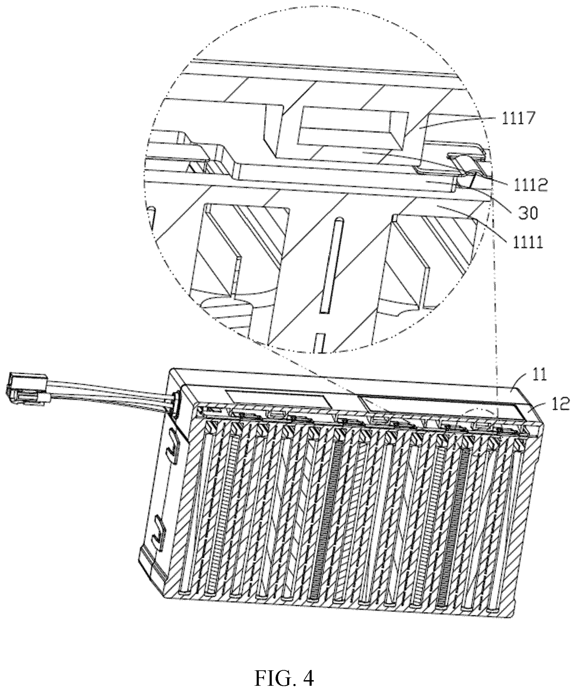

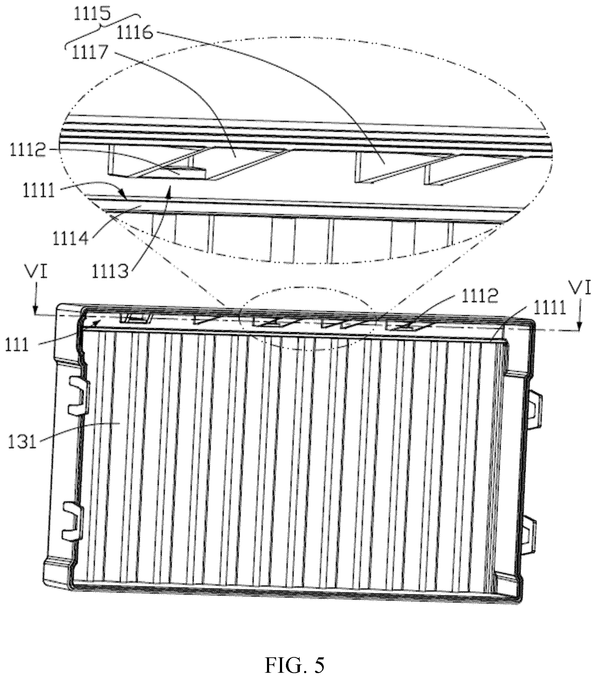

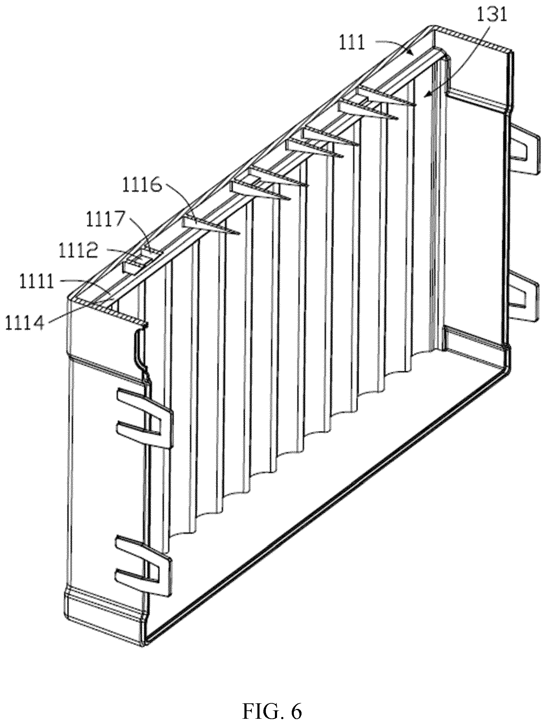

Referring to FIG. 1 to FIG. 6 concurrently, an embodiment of this application discloses a battery pack 100. The battery pack 100 includes a battery shell 10, a cell module 20, and a circuit board 30. The cell module 20 and the circuit board 30 are disposed in the battery shell 10 separately. The cell module 20 is electrically connected to the circuit board 30. The cell module 20 includes a plurality of cells 21. The circuit board 30 is provided with a battery management system.

Specifically, the battery shell 10 includes a first housing 11 and a second housing 12. The first housing 11 is connected to the second housing 12 to form an accommodation cavity 13. The accommodation cavity 13 is configured to accommodate the cell module 20 and the circuit board 30.

In some embodiments, the first housing 11 is fixedly connected to the second housing 12.

The first housing 11 includes a first bottom wall 101, a first top wall 102, a first sidewall 103, and two first end walls 104. The first sidewall 103 connects the first bottom wall 101 and the first top wall 102. Each of the two first end walls 104 is connected to the first bottom wall 101, the first top wall 102, and the first sidewall 103.

The second housing 12 includes a second bottom wall 201, a second top wall 202, a second sidewall 203, and two second end walls 204. The second sidewall 203 connects the second bottom wall 201 and the second top wall 202. Each of the two second end walls 204 is connected to the second bottom wall 201, the second top wall 202, and the second sidewall 203.

In the first housing 11 and the second housing 12, the accommodation cavity 13 formed by the first bottom wall 101, the first top wall 102, the first sidewall 103, the two first end walls 104, the second bottom wall 201, the second top wall 202, the second side wall 203, and the two second end walls 204 is closed.

The first housing 11 further includes a fixing structure 111. The fixing structure 111 is disposed in the accommodation cavity 13. The fixing structure 111 includes a first fixing portion 1111. The first fixing portion 1111 is a prop board. The first fixing portion 1111 extends from the first sidewall 103 toward the accommodation cavity 13. The first fixing portion 1111 is configured to prop and fix the circuit board 30.

Further, the fixing structure 111 includes a second fixing portion 1112. The second fixing portion 1112 extends from the first sidewall 103 toward the accommodation cavity 13. The first fixing portion 1111, the second fixing portion 1112, and the first sidewall 103 form a first slot 1113 configured to fix the circuit board 30. Preferably, the first fixing portion 1111 is parallel to the second fixing portion 1112.

In some embodiments, the first fixing portion 1111 is a board extending to two first end walls 104. The second fixing portion 1112 is a plurality of sections of fixing blocks are parallel to the first fixing portion 1111 and are spaced apart from the first fixing portion 1111 by equal spacings, but this application is not limited to thereto.

In some embodiments, a side of the first fixing portion 1111 faces the second fixing portion 1112 directly contacts a side of the circuit board 30 to prop the circuit board 30. In this embodiment, the fixing structure 111 is disposed on the first sidewall 103. In some embodiments, the fixing structure 111 may be disposed on the first end wall 104 and/or the second end wall 204.

The second housing 12 also includes a fixing structure 111. The fixing structures 111 on the first housing 11 and the second housing 12 constitute an accommodation structure configured to accommodate and fix the circuit board 30.

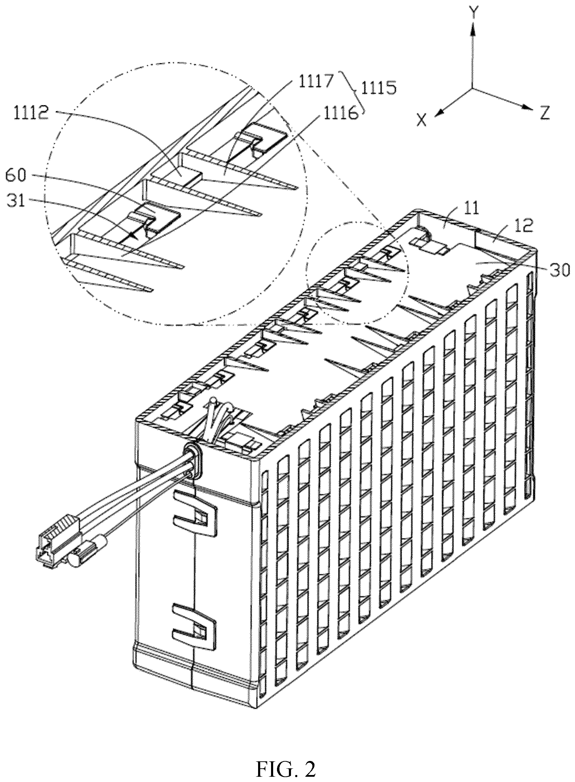

Still further, as shown in FIG. 2, the first slots 1113 on the first housing 11 and the second housing 12 are configured to position the circuit board 30 in a first direction X and a second direction Y The first direction X is perpendicular to the second direction Y When the first housing 11 is connected to the second housing 12, the fixing structures 111 on the first housing 11 and the second housing 12 can further jointly position the circuit board 30 in a third direction Z. The third direction Z is perpendicular to the first direction X and the second direction Y In this embodiment, the third direction Z is a direction in which the first housing 11 is snap-fitted to the second housing 12 for a purpose of fixing.

Specifically, when the first housing 11 is connected to the second housing 12, a spacing between the first slot 1113 on the first housing 11 and the first slot 1113 on the second housing 12 is equal to a width of the circuit board 30, so as to limit the third direction of the circuit board 30.

A first groove 131 is disposed on the first sidewall 103. The first groove 131 is configured to accommodate one side of one or more cells 21. A second groove 231 is disposed on the second sidewall 203. The second groove 231 is configured to accommodate the other side of the one or more cells 21. The first groove 131 and the second groove 231 constitute an accommodation structure configured to accommodate and fix the cell module 20.

The first fixing portion 1111 and the second fixing portion 1112 on the first housing 11 are disposed between the first top wall 102 and the first groove 131. The first fixing portion 1111 and the second fixing portion 1112 on the second housing 12 are disposed between the second top wall 202 and the first groove 231.

The first housing 11 includes a guiding structure 1115. The guiding structure 1115 is configured to guide the circuit board 30 into the first slot 1113.

A side of the first fixing portion 1111 away from the first sidewall 103 is further provided with a guiding surface 1114 facing the first slot 1113. The guiding structure 1115 includes the guiding surface 1114. The guiding surface 1114 is configured to guide the circuit board 30 from a side close to the first fixing portion 1111 to the first slot 1113.

The guiding structure 1115 further includes a first guiding piece 1116 and a second guiding piece 1117. Both the first guiding piece 1116 and the second guiding piece 1117 are disposed on the first sidewall 103, Both the first guiding piece 1116 and the second guiding piece 1117 are disposed on the side of the first slot 1113 away from the first fixing portion 1111. The first guiding piece 1116 and the second guiding piece 1117 are configured to guide the circuit board 30 into the first slot 1113 of the fixing structure 111 from another direction opposite to the guiding surface 1114.

The first guiding piece 1116 and the second guiding piece 1117 may be wedge-shaped blocks.

In some embodiments, the first guiding piece 1116 is disposed on the first sidewall 103 separately. The second guiding piece 1117 and the second fixing portion 1112 are integrated.

In some embodiments, one side of the first guiding piece 1116 and one side of the second guiding piece 1117 are both disposed on the first top wall 102 to prevent the circuit board 30 from being inserted into a gap between the first guiding piece 1116 or the second guiding piece 1117 and the first top wall 102, but this application is not limited thereto.

The second housing 12 also includes a guiding structure 1115. The guiding structures 1115 on the first housing 11 and the second housing 12 constitute a structure configured to guide the circuit board 30.

In some embodiments, the first housing 11 is provided with a snap buckle 114, and the second housing 12 is provided with a snap block 124. The snap buckle 114 is disposed opposite to the snap block 124. When the first housing 11 is connected to the second housing 12, the snap buckle 114 fits with the snap block 124 to fix the first housing 11 and the second housing 12.

In some embodiments, the fixing structure 111 is provided with a first bonding piece, or the circuit board 30 is provided with a first bonding piece, or both the fixing structure 111 and the circuit board 30 are provided with a first bonding piece. The first bonding piece is configured to fixedly connect the circuit board 30 and the fixing structure 111.

In some embodiments, the first bonding piece is glue, and applied, by coating, onto the wall face of the first slot 1113 formed by the first fixing portion 1111, the second fixing portion 1112, and the first sidewall 103, and then the circuit board 30 is fixed onto the first housing 11 at the time of inserting the circuit board 30.

In some embodiments, the battery shell 10 is provided with a second bonding piece, or the cell 21 is provided with a second bonding piece, or both the battery shell 10 and the cell 21 are provided with a second bonding piece. The second bonding piece is configured to connect the cell 21 and the battery shell 10. In this embodiment, the second bonding piece is disposed in the first groove 131 and the second groove 231 of the battery shell 10.

In some embodiments, the second bonding piece is glue, and is applied onto the battery shell 10 and/or the cell 21 by coating.

In some embodiments, the first housing 11 is fixedly connected to the second housing 12 by a connecting material. The connecting material may be glue, tape, or the like.

Specifically, the connecting material is disposed on a peripheral wall of the first housing 11 or the second housing 12, and, when the first housing 11 is connected to the second housing 12, contacts a peripheral wall of the other housing to fix the other housing, thereby fixing the first housing 11 to the second housing 12.

In some embodiments, the first housing 11 may be fixedly connected to the second housing 12 by filling with styrofoam, fastening with a screw, or by other means.

The plurality of cells 21 of the cell module 20 are sequentially arranged in the first groove 131 of the first housing 11, and the plurality of cells 21 are fixedly connected to each other.

In some embodiments, adjacent cells 21 are fixedly connected by foam 40.

Each cell 21 is serially connected to another cell 21 adjacent to it by connecting positive and negative electrodes. In addition, a junction of the positive and negative electrodes of the cell 21 is electrically connected to the circuit board 30 by a connecting piece.

Specifically, the battery pack 100 further includes a first connecting piece 50 and a second connecting piece 60. Each cell 21 includes a cell body 211 and two tabs 212. The two tabs 212 are disposed on the cell body 211 and extend from the same side of the cell body 211. One of the two tabs 212 is a positive tab, and the other is a negative tab. The positive tab of the cell 21 is connected to the negative tab of the adjacent cell 21 (or the negative tab of the cell 21 is connected to the positive tab of the adjacent cell 21), and then connected to one end of the first connecting piece 50. The circuit board 30 is provided with the second connecting piece 60. Another end of the first connecting piece 50 is connected to the second connecting piece 60.

In some embodiments, the first connecting piece 50 and the second connecting piece 60 are copper plates.

Preferably, the cell 21 is connected to the tabs of the adjacent cell 21 by welding to the first connecting piece 50, for example, by laser welding.

In some embodiments, a connecting groove 31 is provided at an edge of the circuit board 30. Another end of the first connecting piece 50 extends into the connecting groove 31. The second connecting piece 60 is welded to the periphery of the connecting groove 31, and one end thereof also extends into the connecting groove 31. The first connecting piece 50 extending into the connecting groove 31 is connected to the second connecting piece 60 extending into the connecting groove 31.

Preferably, the first connecting piece 50 and the second connecting piece 60 extend into the connecting groove 31 are connected by laser welding.

### Second Embodiment

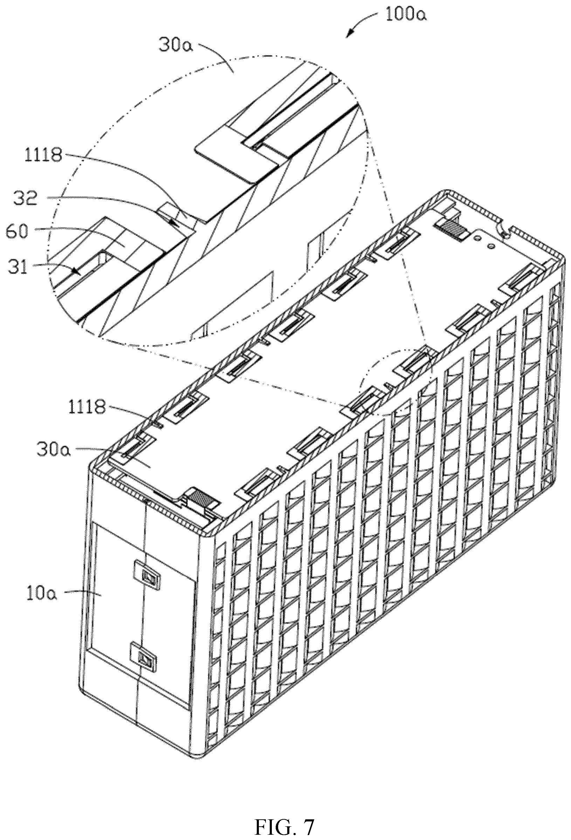

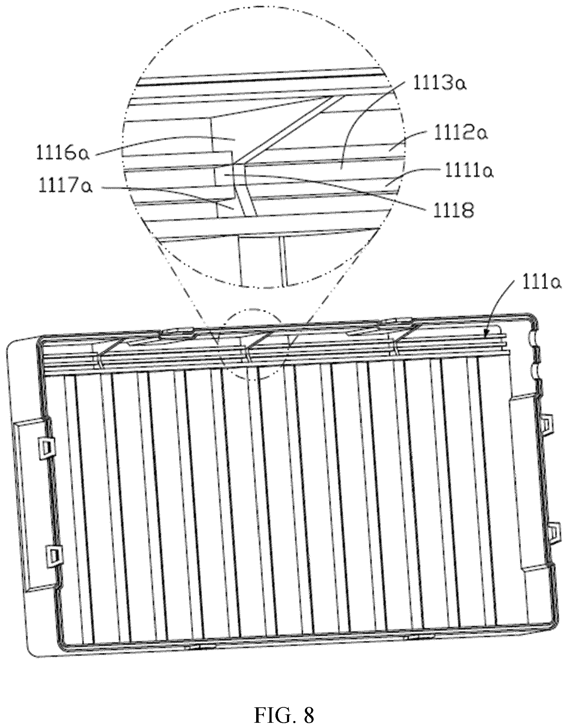

Referring to FIG. 7 to FIG. 8 together, another embodiment of this application discloses a battery pack 100a. The battery pack 100a also includes a battery shell 10a, a cell module, and a circuit board 30a. The structure of the battery 100a is almost the same as the structure of the battery 100 disclosed in the first embodiment, but differs in the structure of the guiding structure 1115 disposed around the first slot 1113.

Specifically, in this embodiment, the guiding structure does not include a guiding surface, and the first guiding piece 1116a is disposed on a side of the second fixing portion 1112a back from the first fixing portion 1111a, the second guiding piece 1117a is disposed on a side of the first fixing portion 1111a back from the second fixing portion 1112a, respectively. The first guiding piece 1116a and the second guiding piece 1117a guide the circuit board 30a from two sides of the first slot 1113a respectively.

In some embodiments, a tilt angle of a sloping side of the first guiding piece 1116a is smaller than a tilt angle of a sloping side of the second guiding piece 1117a, and a width of the first guiding piece 1116a is greater than the width of the second guiding piece 1117a. In this way, a length of the sloping side of the first guiding piece 1116a (a tilt structure located on an upper side) is greater than a length of the sloping side of the second guiding piece 1117a (a tilt structure located on a lower side). Designed in this way, the first guiding piece 1116a is more capable of guiding than the second guiding piece 1117a. In inserting the circuit board 30a, the circuit board 30a is lifted upward as far as practicable and approaches the first guiding piece 1116a, and the guiding is implemented by relying on the first guiding piece 1116a.

In some embodiments, the first guiding piece 1116a and the second guiding piece 1117a are symmetrically disposed on two sides of the first slot 1113a, but this application is not limited thereto. Alternatively, the first guiding piece 1116a and the second guiding piece 1117a may be spaced apart on the two sides of the first slot 1113a.

The fixing structure 111a further includes a positioning piece 1118. The positioning piece 1118 extends from the first sidewall 103 toward the accommodation cavity. The circuit board 30a is provided with a positioning slot 32 fits with the positioning piece 1118. The positioning piece 1118 is configured to fit with the positioning slot 32 to position the circuit board 30a.

Specifically, the positioning piece 1118 is disposed in the first slot 1113a. The positioning slot 32 is provided on a lateral edge of the circuit board 30. The positioning piece 1118 is snap-fitted into the positioning slot 32 to implement the positioning of the circuit board 30 in the first direction.

In some embodiments, the positioning slot 32 includes a sloping side structure facilitates snap-fitting of the positioning piece 1118 into the positioning slot 32.

Specifically, the positioning slot 32 may be a V-shaped structure.

In some embodiments, the first guiding piece 1116a, the positioning piece 1118, and the second guiding piece 1117a are integrated, but this application is not limited thereto.

During assembling, a plurality of cells 21 are sequentially bonded together by foam 40. Then the positive tab and the negative tab of adj acent cells 21 are connected by the first connecting piece 50 by welding. Then the first connecting piece 50 is welded to the second connecting piece 60, and the cell module 20 and the circuit board 30 are put together into a glued first groove 131 or a glued first slot 1113 of the first housing 11 or the second housing 12. The other housing is snap-fitted onto the housing in which the cell module 20 and the circuit board 30 are mounted. After the glue is applied and solidified, the assembling of the battery pack is implemented.

In the battery shell 10 and the battery pack 100 with the battery shell 10, the accommodation cavity 13 formed by the first housing 11 and the second housing 12 accommodates the circuit board 30. Then the first fixing portion 1111 disposed in the accommodation cavity 13 fixes the circuit board 30. In this way, the circuit board 30 is fixed in the battery shell 10, and the circuit board 30 can be reinforced by means such as bonding, thereby saving screws and nuts, improving work efficiency, and reducing cost.

The foregoing some embodiments are merely intended for describing the technical solutions of this application but not intended as a limitation. Although this application is described in detail with reference to the foregoing optional some embodiments, a person of ordinary skill in the art understands that modifications or equivalent substitutions may be made to the technical solutions of this application without departing from the spirit and essence of the technical solutions of this application.

## Claims

1. A battery shell, configured to accommodate a plurality of cells and a circuit board, wherein the battery shell comprising a first housing and a second housing;
the first housing and the second housing form an accommodation cavity configured to accommodate the plurality of cells and the circuit board; and
the first housing comprises a first sidewall and a fixing structure, the fixing structure comprises a first fixing portion disposed on the first sidewall and toward the accommodation cavity, and the first fixing portion is configured to fix the circuit board.

2. The battery shell according to claim 1, wherein the fixing structure comprises a second fixing portion disposed on the first sidewall and toward the accommodation cavity; the first fixing portion extends from the first sidewall toward the accommodation cavity, the first fixing portion, the second fixing portion, and the first sidewall form a first slot, and the first slot is configured to fix the circuit board.

3. The battery shell according to claim 2, wherein the first housing comprises a first bottom wall and a first top wall; the first sidewall connects the first bottom wall and the first top wall; and two first end walls connect the first bottom wall, the first top wall, and the first sidewall; and the second housing comprises a second bottom wall, a second top wall, a second sidewall connects the second bottom wall and the second top wall, and two second end walls connect the second bottom wall, the second top wall, and the second sidewall.

4. The battery shell according to claim 3, wherein the first sidewall is provided with a first groove configured to accommodate one side of one or more cells, and the second sidewall is provided with a second groove configured to accommodate an opposite side of the one or more cells.

5. The battery shell according to claim 4, wherein the first housing comprises a guiding structure disposed on the first sidewall, a side of the first fixing portion farther away from the first sidewall is provided with a guiding surface facing the first slot, and the guiding structure comprises the guiding surface.

6. The battery shell according to claim 4, wherein the first fixing portion and the second fixing portion are disposed between the first top wall and the first groove.

7. A battery pack, comprising a battery shell, a cell module, and a circuit board, and the cell module is electrically connected to the circuit board, wherein the battery shell is the battery shell according to any one of claims 1 to 6.

8. The battery pack according to claim 7, wherein the battery pack comprises a first connecting piece and a second connecting piece, the first connecting piece is connected to tabs of two adjacent cells by welding, and the second connecting piece is welded to the circuit board and is connected to the first connecting piece by welding.

9. The battery pack according to claim 7, wherein a positioning slot is disposed at a lateral edge of the circuit board, a fixing structure comprises a positioning piece disposed on a first sidewall and toward an accommodation cavity, and the positioning piece is configured to position the positioning slot disposed in the circuit board.

10. The battery pack according to claim 9, wherein the positioning slot comprises a bevel structure.

11. The battery pack according to claim 10, wherein the positioning slot is a V-shaped structure.

12. The battery pack according to claim 7, wherein a first bonding piece is disposed on a fixing structure and/or the circuit board, and the first bonding piece is configured to fix the circuit board and the fixing structure.

13. The battery pack according to claim 7, wherein a second bonding piece is disposed on the battery shell and/or a cell, and the second bonding piece is configured to fix the cell and the battery shell.
